# EUROPÄISCHE PATENTANMELDUNG

(11) **EP 3 540 294 A1**
(43) Veröffentlichungstag der Anmeldung: **18.09.2019**
(21) Anmeldenummer: 18161982.6
(22) Anmeldetag: 15.03.2018
(51) Int. Cl.: F21S 41/125, F21S 41/143, F21S 41/265

(54) **KRAFTFAHRZEUGLICHTMODUL**

(71) Anmelder: ZKW Group GmbH, 3250 Wieselburg (AT)
(72) Erfinder: Gürtl, Josef, 3233 Kilb (AT)
(74) Vertreter: Patentanwaltskanzlei Matschnig & Forsthuber OG

(57) **Zusammenfassung**

Kraftfahrzeuglichtmodul (1) umfassend ein zum Erzeugen vorzugsweise kollimierten Lichts (3) eingerichtetes Leuchtmittel (2), ein dem Leuchtmittel (2) nachgelagertes Projektionssystem (4), welches das von dem Leuchtmittel (2) erzeugte Licht (3) in einen Bereich (5) vor dem Kraftfahrzeuglichtmodul (1) projiziert, wobei das Projektionssystem (4) einen Träger (40) aus einem von Licht (3) durchstrahlbaren Material, ein Mikro-Austrittsoptik-Array (41), und eine Blendenvorrichtung (42), aufweist, wobei die Blendenvorrichtung (42) an einer dem Leuchtmittel (2) zugewandten Seite des Trägers (40) und das Mikro-Austrittsoptik-Array (41) nah an einer dem Leuchtmittel (2) abgewandten Seite des Trägers (40) angeordnet ist, die Blendenvorrichtung (42) mehrere Blenden-Bereiche (42a bis 421) aufweist, wobei jedem Blenden-Bereich (42a bis 421) zumindest eine Mikro-Austrittsoptik (41a bis 41d) des Mikro-Austrittsoptik-Arrays (41) zugeordnet ist und jeder Blenden-Bereich (42a bis 421) und zumindest eine, diesem Blenden-Bereich (42a bis 421) zugeordnete Mikro-Austrittsoptik (41a bis 41d) ein Teil-Projektionssystem bilden, wobei jedem Teil-Projektionssystem ein Leuchtmittel-Bereich (2a bis 2d) des Leuchtmittels (2) derart zugeordnet ist, dass das vorzugsweise kollimierte, von diesem Leuchtmittel-Bereich (2a bis 2d) erzeugte Licht (3a bis 3d) im Wesentlichen nur auf jenes Teil-Projektionssystem trifft, dem dieser Leuchtmittel-Bereich (2a bis 2d) zugeordnet ist, wobei die Teil-Projektionssysteme unterschiedlich ausgebildet sind und die Leuchtmittel-Bereiche (2a bis 2d) mittels einer Steuereinrichtung (6) unabhängig voneinander steuerbar sind, wobei jedes Teil-Projektionssystem von dem Leuchtmittel-Bereich (2a bis 2d) abgestrahltes Licht (3a bis 3d) in Form eines steuerbaren Teil-Lichtmusters in einen Bereich (5) vor dem Kraftfahrzeuglichtmodul (1) projiziert und die steuerbaren Teil-Lichtmuster gemeinsam ein steuerbares Lichtmuster bilden.

## Beschreibung

Die Erfindung betrifft Kraftfahrzeuglichtmodul umfassend ein zum Erzeugen vorzugsweise kollimierten Lichts eingerichtetes Leuchtmittel, ein dem Leuchtmittel nachgelagertes Projektionssystem, welches das von dem Leuchtmittel erzeugte Licht in einen Bereich vor dem Kraftfahrzeuglichtmodul projiziert, wobei das Projektionssystem einen Träger aus einem von Licht durchstrahlbaren Material, ein Mikro-Austrittsoptik-Array, und eine Blendenvorrichtung, aufweist, wobei die Blendenvorrichtung an einer dem Leuchtmittel zugewandten Seite des Trägers und das Mikro-Austrittsoptik-Array nah an einer dem Leuchtmittel abgewandten Seite des Trägers angeordnet ist, die Blendenvorrichtung mehrere Blenden-Bereiche aufweist, wobei jedem Blenden-Bereich zumindest eine Mikro-Austrittsoptik des Mikro-Austrittsoptik-Arrays zugeordnet ist und jeder Blenden-Bereich und zumindest eine, diesem Blenden-Bereich zugeordnete Mikro-Austrittsoptik ein Teil-Projektionssystem bilden, wobei jedem Teil-Projektionssystem ein Leuchtmittel-Bereich des Leuchtmittels derart zugeordnet ist, dass das vorzugsweise kollimierte, von diesem Leuchtmittel-Bereich erzeugte Licht im Wesentlichen nur auf jenes Teil-Projektionssystem trifft, dem dieser Leuchtmittel-Bereich zugeordnet ist.

Außerdem betrifft die Erfindung ein Beleuchtungssystem für ein Kraftfahrzeug umfassend zumindest ein oben genanntes Kraftfahrzeuglichtmodul.

Weiters betrifft die Erfindung einen Kraftfahrzeugscheinwerfer mit zumindest einem oben genannten Kraftfahrzeuglichtmodul oder einem oben genannten Beleuchtungssystem.

Darüber hinaus betrifft die Erfindung ein Kraftfahrzeug mit zumindest einem Kraftfahrzeuglichtmodul, wobei das Kraftfahrzeuglichtmodul in dem Inneren des Kraftfahrzeugs verbaut ist.

Immer öfter wird Lichtinszenierung in und um das Fahrzeug thematisiert. Darüber hinaus ist mit dem Wandel zum autonomen Fahren auch ein Wandel bei der KFZ Beleuchtung zu erwarten. Es werden zunehmend zusätzliche Beleuchtungsszenarien mit Fokus auf Personalisierung gefragt. Dabei sollen dafür entwickelte Lichtmodule hohe Flexibilität betreffend Lichtmuster, die sie erzeugen können, besitzen gleichzeitig aber auch einen geringen Bauraum erfordern und robustes Design aufweisen.

Kraftfahrzeuglichtmodule der oben genannten Art sind im Stand der Technik bekannt (siehe z.B. DE 102015220911 A1, DE 102015115242 A1). Solche Kraftfahrzeuglichtmodule haben zum Nachteil, dass sie statisch sind. Das heißt, die Anzahl an möglichen Leuchtmuster ist ziemlich begrenzt.

Die Aufgabe der vorliegenden Erfindung besteht darin, ein Kraftfahrzeuglichtmodul zu schaffen, bei welchem erstens die Anzahl der möglichen Leuchtmuster gesteigert wird und zweitens dynamische (beispielsweise in Echtzeit abspielbare) Leuchtmuster möglich sind.

Diese Aufgabe wird mit einem Kraftfahrzeuglichtmodul der oben genannten Art erfindungsgemäß dadurch gelöst, die Teil-Projektionssysteme unterschiedlich ausgebildet sind und die Leuchtmittel-Bereiche mittels einer Steuereinrichtung unabhängig voneinander steuerbar sind, wobei jedes Teil-Projektionssystem von dem Leuchtmittel-Bereich abgestrahltes Licht in Form eines (beispielsweise in Farbe, Helligkeit usw.) steuerbaren Teil-Lichtmusters in einen Bereich vor dem Kraftfahrzeuglichtmodul projiziert und die steuerbaren Teil-Lichtmuster gemeinsam ein steuerbares Lichtmuster bilden.

Die Aufgabe wird auch mit einem Beleuchtungssystem der oben genannten Art gelöst, welches die Steuereinrichtung umfasst.

Durch Einschalten oder Dimmen unterschiedlicher Leuchtmittel-Bereiche werden diesen Leuchtmittel-Bereichen zugeordnete Teil-Projektionssysteme mit unterschiedlicher Lichtmenge ausgeleuchtet, wodurch die Anzahl der Leuchtmuster gesteigert werden kann. Es können auch dynamische Leuchtmuster erzeugt werden. Dabei ist anzumerken, dass die Form des steuerbaren Lichtmusters sowohl durch die Steuereinrichtung (beispielsweise Ein- und Ausschalten der Teil-Lichtmuster) als auch durch Gestaltung der Blenden-Bereiche (Form und Position der Blendenkanten in Blenden-Bereichen usw.) beeinflusst werden kann.

Das Leuchtmittel kann beispielsweise eine LED-Lichtquelle sein. Optional kann der LED-Lichtquelle ein Optik-Element, wie eine Optik, beispielsweise eine TIR-Optik oder ein Silikon-Optikkörper, nachgelagert sein, welche Optik oder welcher Silikon-Optikkörper das von der LED-Lichtquelle abgestrahltes Licht kollimiert. Das Leuchtmittel kann darüber hinaus ein Lichtkonversionsmittel sein. Dem Lichtkonversionsmittel kann ebenfalls ein Optik-Element der oben genannten Art nachgelagert sein, welches das vom Lichtkonversionsmittel erzeugtes, meist diffuses Licht kollimiert.

Das Mikro-Austrittsoptik-Array - ein Array von Mikrooptiken, vorzugsweise Mikrolinsen (charakteristische Größe liegt vorzugsweise im Mikrometer Bereich), welche in einem matrixartigen Array in einer quer zur optischen Achse des Kraftfahrzeuglichtmoduls stehenden Ebene angeordnet sind. Solche Mikro-Austrittsoptik-Arrays sind beispielsweise in den Anmeldungen WO 2015/058227 A1, WO 2017/066817 A1 und WO 2017/066818 A1 der Anmelderin eingehend beschrieben.

Das Mikro-Austrittsoptik-Array kann mit dem Träger, der beispielsweise als ein Glassubstrat ausgebildet ist, fix verbunden sein.

Der Träger kann demnach sowohl mit der Blendenvorrichtung als auch mit dem Mikro-Austrittsoptik-Array verbunden sein. Dadurch kann beispielsweise eine optische Dicke des gesamten Projektionssystems und folglich seine optischen Parameter, wie Schnittweite, einfacher geändert werden. Der Strahlengang des Lichts des Leuchtmittels durchläuft beide Materialien - Träger und Mikro-Austrittsoptik-Array. Damit übernimmt das Material des Trägers, beispielsweise Glas, einen Teil der Linsenkörper der Mikro-Austrittsoptiken des Mikro-Austrittsoptik-Arrays. Dadurch kann beispielsweise die Menge des Materials, welches für die Herstellung des Mikro-Austrittsoptik-Arrays benötigt wird, reduziert werden.

Es kann mit Vorteil vorgesehen sein, dass das Projektionssystem austauschbar ist.

Es kann auch vorgesehen sein, dass die Blendenvorrichtung austauschbar ist.

Sofern im Nachfolgenden die Austauschbarkeit des Projektionssystems ausgeführt wird, gelten diese Ausführungen sinngemäß auch für die Austauschbarkeit der Blendenvorrichtung.

Dafür können beim Kraftfahrzeuglichtmodul beispielsweise entsprechende Justier- und Fixiermittel vorgesehen sein, welche es erlauben, das Projektionssystem in Bezug auf das Leuchtmittel zu positionieren, justieren und nach dem Justieren zu fixieren. Um die Handhabung des Kraftfahrzeuglichtmoduls zu vereinfachen können die Justier- und Fixiermittel derart ausgebildet sein, dass sich das Projektionssystem beziehungsweise Blendenvorrichtung leicht austauschen lässt. Dafür können beispielsweise ähnliche Mechanismen wie bei einem Diaprojektor in Frage kommen. Dabei können das entsprechende Projektionssystem beziehungsweise die Blendenvorrichtung des entsprechenden Projektionssystems bei der vorliegenden Erfindung Projektionssystem ähnlich wie Dias in einem Diaprojektor austauschbar sein.

Dadurch kann die Benutzerfreundlichkeit des Kraftfahrzeuglichtmoduls gesteigert werden, indem der Benutzer beispielsweise die Projektionssysteme beziehungsweise ihre Blendenvorrichtung mit unterschiedlich ausgebildeten Blendenvorrichtungen erwerben, bei Bedarf selbst austauschen und auf diese Weise ein von ihm gewünschtes Leuchtmuster erreichen kann.

Darüber hinaus kann vorgesehen sein, dass die Blenden-Bereiche der unterschiedlichen Teil-Projektionssysteme unterschiedlich ausgebildet sind. Beispielsweise können die Blenden-Bereiche einer Blendenvorrichtung in einem 4x5 Array angeordnet sein. Die Blendenvorrichtungen in der vorliegenden Erfindung können Größen von ca. 7,2x10mm erreichen.

Bei einer praxisbewährten Ausführungsform kann vorgesehen sein, dass das Mikro-Austrittsoptik-Array als ein Plättchen ausgebildet ist, wobei das Plättchen in etwa 1 bis 10 mm breit und 1 bis 10 mm lang, vorzugsweise 1 bis 2 mm breit und 2 bis 3 mm lang, insbesondere 1,8 mm mal 2 mm groß ist.

Es kann zweckmäßig sein, wenn die Mikro-Austrittsoptiken in dem Mikro-Austrittsoptik-Array in einem regelmäßigen, beispielsweise in einem quadratischen oder hexagonalen, Muster angeordnet und vorzugsweise als konvexe Linsen ausgebildet sind, wobei die Linsen eine charakteristische Größe, beispielsweise einen charakteristischen Durchmesser ihrer dem Leuchtmittel zugewandten Seite, im Mikrometerbereich aufweisen.

Durch die oben genannte hexagonale Anordnung kann die Flächenausnutzung (beispielsweise des Trägers) verbessert werden.

Weiters kann es zweckmäßig sein, wenn die Steuereinrichtung ein Steuergerät mit einem internen Speichermedium umfasst, wobei in dem Steuergerät eine Software gespeichert ist, welche Software konfiguriert ist, die einzelnen Leuchtmittel-Bereiche zu steuern.

Darüber hinaus ist es denkbar, dass das Steuergerät tragbar ist, vorzugsweise als ein Smartphone oder ein Tablet ausgebildet ist, und die Software als eine Anwendungssoftware, vorzugsweise eine Smartphone- oder Tablet-App, ausgebildet ist.

Es ist vorteilhaft, wenn das Leuchtmittel als eine mehrere einzelne LEDs umfassende LED-Lichtquelle ausgebildet ist, wobei vorzugsweise jeder Leuchtmittel-Bereich zumindest eine LED umfasst.

Weitere bautechnische Vorteile ergeben sich, wenn die LEDs auf einer gemeinsamen Platine in einer matrixartigen Anordnung aufgebracht sind, wobei vorzugsweise jeder einzelnen LED ein lichtkollimierender Optikkörper, beispielsweise eine TIR-Linse oder ein Silikon-Optikkörper, nachgelagert ist. Beispielsweise können es 20 in einer 4x5 Matrix angeordneten LEDs sein.

Hinsichtlich Justierens des Projektionssystems und Anpassens der Leuchtmuster kann es vorteilhaft sein, wenn das Projektionssystem ferner ein Mikro-Eintrittsoptik-Array umfasst, welches dem Träger derart vorgelagert ist, dass jeder Mikro-Austrittsoptik zumindest eine Mikro-Eintrittsoptik des Mikro-Eintrittsoptik-Arrays zugeordnet ist.

Es kann darüber hinaus vorgesehen sein, dass unterschiedliche Leuchtmittel-Bereiche eingerichtet sind, Licht in jeweils unterschiedlichen Wellenlängen abzustrahlen. Ein anderes Einsatzgebiet ist die Ambiente- oder Konturbeleuchtung in Fahrzeugen.

Bei einer bevorzugten des erfindungsgemäßen Beleuchtungssystems kann vorgesehen sein, dass auf der Steuereinrichtung eine Software gespeichert ist, welche Software konfiguriert ist, die einzelnen Leuchtmittel-Bereiche zu steuern, und die Steuereinrichtung entweder ein integraler Teil des Kraftfahrzeuglichtmoduls oder eine - in Hinblick auf das Kraftfahrzeuglichtmodul - externe Steuereinrichtung ist.

Dabei ist es denkbar, dass die Software der Steuereinrichtung mittels eines tragbaren Steuergeräts fernbedienbar ist, wobei das tragbare Steuergerät vorzugsweise als ein Smartphone oder ein Tablet ausgebildet ist, und die Software als eine Anwendungssoftware ausgebildet ist.

Es kann auch vorgesehen sein, dass das Beleuchtungssystem in einem Kraftfahrzeugscheinwerfer verbaut ist.

Alternativ kann die oben genannte Steuereinrichtung beispielsweise ein Kraftfahrzeug-Bordcomputer sein. In diesem Fall kann nur das Kraftfahrzeuglichtmodul in einem Kraftfahrzeugscheinwerfer oder beispielsweise im Inneren eines Kraftfahrzeugs verbaut sein.

Die Erfindung samt weiteren Vorteilen ist im Folgenden an Hand beispielhafter Ausführungsformen näher erläutert, die in der Zeichnung veranschaulicht sind. In dieser zeigt
Fig. 1 einen schematischen Aufbau eines Beleuchtungssystems für ein Kraftfahrzeug;
Fig. 2 einen schematischen Aufbau eines Beleuchtungssystems für ein Kraftfahrzeug mit Lichtquellen in unterschiedlichen Farben;
Fig. 3 eine perspektivische Ansicht eines Lichtmoduls des Beleuchtungssystems der Figur 1 oder 2;
Fig. 4 ein Mikro-Austrittsoptik-Array;
Fig. 5 eine perspektivische Ansicht eines Lichtmoduls der Figur 1 oder 2, das an einem Kühlkörper befestigt ist, und
Fig. 6a und 6b zwei Blendenvorrichtungen.

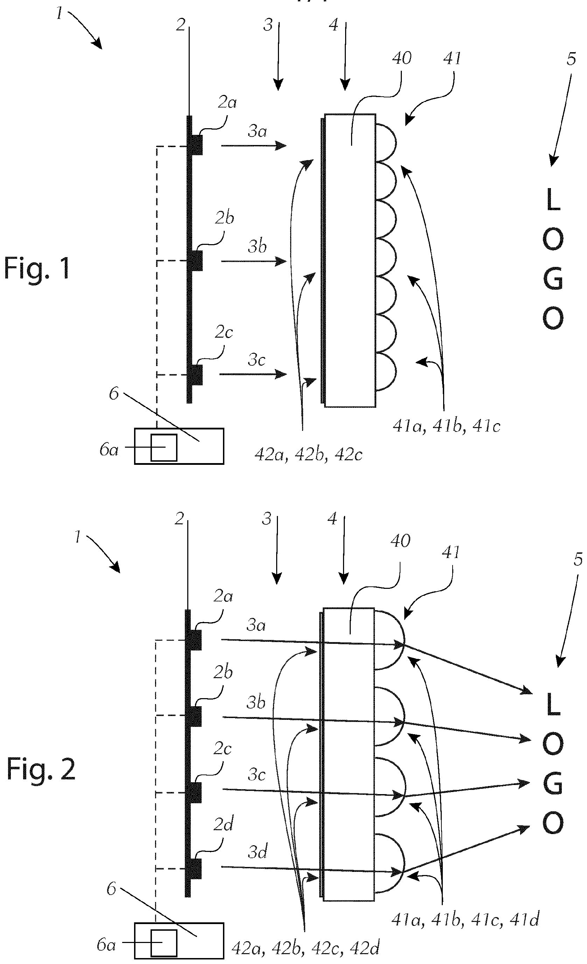

Zuerst wird auf Figuren 1 und 2 Bezug genommen. Beide zeigen einen schematischen Aufbau eines Beleuchtungssystems für ein Kraftfahrzeug mit einem Lichtmodul 1, welches Lichtmodul 1 sowohl in einem Kraftfahrzeugscheinwerfer als auch beispielsweise im Innenraum eines Kraftfahrzeugs verbaut werden kann, und einer Steuereinrichtung 6. Die Steuereinrichtung kann sowohl ein integraler Teil des Lichtmoduls 1 sein als auch dem Lichtmodul 1 extern zugeordnet und beispielsweise als Kraftfahrzeug-Bordcomputer ausgebildet sein. Das Lichtmodul 1 kann einem erfindungsgemäßen Kraftfahrzeuglichtmodul entsprechen. Das Lichtmodul 1 weist ein Leuchtmittel 2 und ein dem Leuchtmittel 2 nachgelagertes Projektionssystem 4 auf. Das Leuchtmittel 2 ist eingerichtet, vorzugsweise derart ausgebildet, dass es in einem eingeschalteten Zustand Licht 3 erzeugt. Wie eingangs beschrieben, können dem Leuchtmittel 2 lichtkollimierende Optik-Elemente (hier nicht gezeigt) vorgelagert sein. Diese Optik-Elemente sind nicht notwendig und dienen einer verbesserten Einkoppelung des vom Leuchtmittel 2 abgestrahlten Licht 3 in das Projektionssystem 4. Die Einkoppelung kann auch durch Reduzieren des Abstandes zwischen dem Leuchtmittel 2 und dem Projektionssystem 4 erreicht werden.

Mittels des Projektionssystems 4 wird das Licht 3, zum Beispiel in Form eines vorgegebenen steuerbaren Lichtmusters, insbesondere eines gewünschten Logos oder eines Pfeils, in einen Bereich 5 vor dem Lichtmodul 1, beispielsweise in den Verkehrsraum, insbesondere auf den Fahrbahnbelag, wenn das Lichtmodul in einem Kraftfahrzeug in Betrieb genommen wird, abgebildet. Alternativ kann der Bereich 5 auch im Kraftfahrzeuginneren liegen, wenn das Lichtmodul 1 im Innenraum des Kraftfahrzeugs verbaut ist.

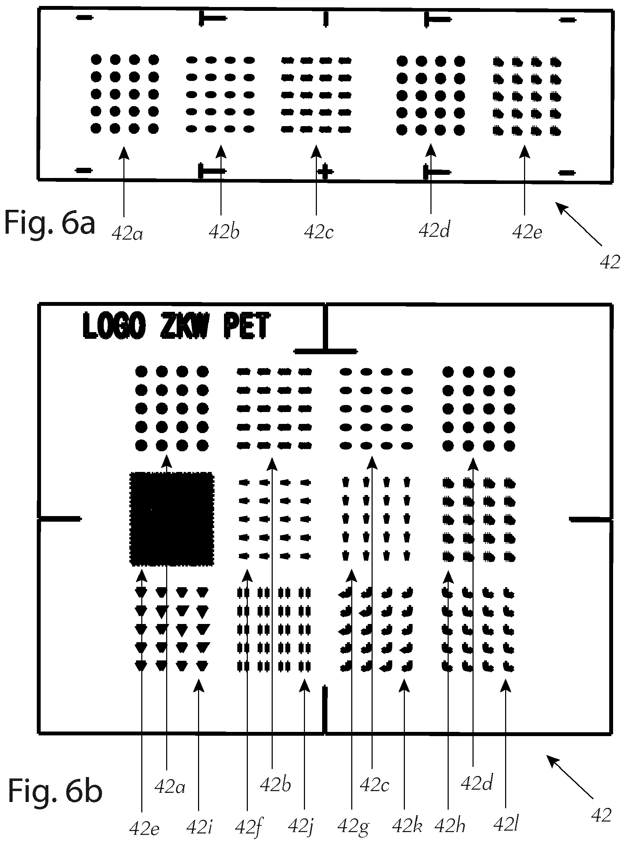

Das Projektionssystem 4 umfasst einen Träger 40 aus einem von dem beispielsweise kollimierten Licht 3 durchstrahlbaren Material, ein Mikro-Austrittsoptik-Array 41 und eine Blendenvorrichtung 42. Die Blendenvorrichtung 42 ist an einer dem Leuchtmittel 2 zugewandten Seite des Trägers 40 angeordnet. Das Mikro-Austrittsoptik-Array 41 ist nah, sodass ein beispielsweise 0 bis 10 mm großer Luftspalt vorhanden ist, oder direkt an einer dem Leuchtmittel 2 abgewandten Seite des Trägers 40 angeordnet. Dabei sollte der Luftspalt derart sein, dass das ganze durch den Träger 40 durchgedrungene Licht 3 auf das Mikro-Austrittsoptik-Array 41 trifft und vorzugsweise beinah kein Streulicht und/oder Lichtverluste entsteht/entstehen. Die Blendenvorrichtung 42 weist mehrere Blenden-Bereiche 42a bis 42l auf (siehe auch Figuren 6a und 6b), wobei jedem Blenden-Bereich 42a bis 42l zumindest eine Mikro-Austrittsoptik 41a bis 41d des Mikro-Austrittsoptik-Arrays 41 korrespondiert, wobei jeder Blenden-Bereich 42a bis 42l und zumindest eine, diesem Blenden-Bereich 42a bis 42l korrespondierende Mikro-Austrittsoptik 41a bis 41d ein Teil-Projektionssystem bilden. Dabei ist jedem Teil-Projektionssystem ein Leuchtmittel-Bereich 2a bis 2d des Leuchtmittels 2 derart zugeordnet, dass das beispielsweise kollimierte von diesem Leuchtmittel-Bereich 2a bis 2d erzeugte Licht 3a bis 3d im Wesentlichen nur auf das Teil-Projektionssystem trifft, dem dieser Leuchtmittel-Bereich 2a bis 2d zugeordnet ist. Das Leuchtmittel 2 des Lichtmoduls 1 der Figur 2 ist derart ausgebildet, dass seine unterschiedlichen Leuchtmittel-Bereiche 2a bis 2d Licht in unterschiedlichen Farben, Wellenlängen abstrahlen können. Sowohl der Träger 40 als auch das Mikro-Austrittsoptik-Array 41 können aus verschiedenen Materialien hergestellt werden, beispielsweise aus UV-Acrylat, Silikon, Glas oder Kunststoff. Träger aus Glas - Glasträger - haben sich in der Praxis bewährt. Das Mikro-Austrittsoptik-Array 41 kann beispielsweise direkt an dem Träger 40 angebracht, insbesondere mit diesem verklebt sein.

An dieser Stelle sei angemerkt, dass die Anzahl der Leuchtmittel-Bereiche 2a bis 2d der Anzahl der Teil-Projektionssysteme vorzugsweise gleich ist. Es kann auch vorgesehen sein, dass jedem Blenden-Bereich 42a bis 42l genau eine Mikro-Austrittsoptik 41a bis 41d korrespondiert. Die Anzahl der Leuchtmittel-Bereiche 2a bis 2d, sowie die Anzahl der Teil-Projektionssysteme variieren. Sie kann 1 bis 20 beziehungsweise bis 30 betragen, je nach gewünschte Lichtleistung des Systems. Die Anzahl der Teil-Projektionssysteme hängt beispielsweise mit der Lichtausbeute zusammen, da die Lichtmenge /Fläche von dem jeweiligen Leuchtmittel, welches beispielsweise als LED-Lichtquelle mit einem vorgelagerten Kollimator-Element ausgebildet sein kann, abhängt. Ein Kollimator-Element kann beispielsweise eine oder mehrere kollimierende Vorsatzoptiken beziehungsweise Optikkörper, wie TIR-Linsen, oder einen oder mehrere kollimierenden Reflektoren (hohlen Optikkörper) umfassen. Bei Anwendungen, für die wenig Licht benötigt wird kann auch schon ein einziges Teil-Projektionssystem genügen. Figur 6a zeigt beispielsweise fünf in einer Reihe angeordneten Blenden-Bereiche 42a bis 42e. Figur 6b zeigt beispielsweise zwölf in einer 3x4 Matrix angeordneten Blenden-Bereiche 42a bis 42l.

Die Teil-Projektionssysteme sind unterschiedlich ausgebildet. Unter Berücksichtigung des oben Gesagten heißt es, dass mithilfe unterschiedlicher Teil-Projektionssysteme unterschiedliche steuerbare Teil-Lichtmuster erzeugt werden können. Die Teil-Lichtmuster gemeinsam bilden das steuerbare Lichtmuster. Die oben genannte Steuereinrichtung 6 eingerichtet, die Leuchtmittel-Bereiche 2a bis 2d unabhängig voneinander zu steuern. Dadurch wird die Anzahl an Variationen der abgestrahlten Lichtmuster deutlich erhöht. So können bestimmte einzelne Leuchtmittel-Bereiche 2a bis 2d mittels der Steuereinrichtung 6 gedimmt oder gar ausgeschaltet oder erhellt werden, wodurch die einen Teil-Lichtmuster nicht mehr entstehen, dafür aber die anderen. So ist es z.B. möglich zwischen unterschiedlichen Logos oder anderen Zeichen zu schalten oder diese nach Belieben kombinieren.

Es kann vorgesehen sein, dass das ganze Projektionssystem 4 oder nur seine Blendenvorrichtung 42 austauschbar ist. Wodurch sich noch weitere Gestaltungsfreiheiten ergeben. Ein Kunde kann somit ein Projektionssystem beziehungsweise ihre Blendenvorrichtung mit den gewünschten Symbolen erwerben und austauschen. Damit kann die individuelle Personalisierung wesentlich erweitert werden, ohne den Grundaufbau des Systems zu verteuern.

Das Mikro-Austrittsoptik-Array 41 kann als ein Plättchen ausgebildet sein. Welches Plättchen in etwa 1 bis 10 mm breit und 1 bis 10 mm lang, vorzugsweise 1 bis 2 mm breit und 2 bis 3 mm lang ist. Insbesondere kann eine Mikro-Austrittsoptik 1,8 mm mal 2 mm groß sein. Daraus können Mikro-Austrittsoptik-Arrays 41 unterschiedlicher Größen, beispielsweise 10x10mm aber auch 36x55mm, gebildet werden. Dabei ist das Plättchen, wie den Figuren zweifelsohne zu entnehmen ist in einer zu einer Hauptabstrahlrichtung des Lichtmoduls senkrecht stehenden Ebene angeordnet.

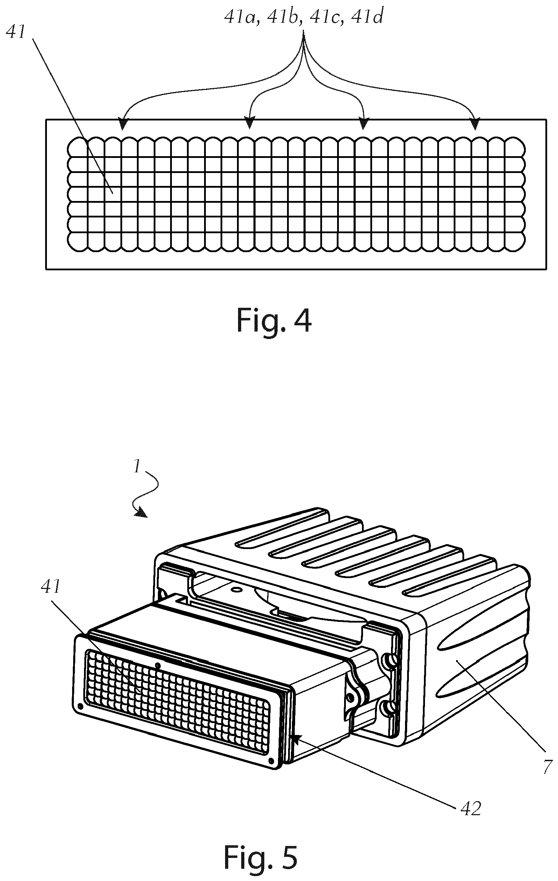

Vorzugsweise sind die Mikro-Austrittsoptiken 41a bis 41d in dem Mikro-Austrittsoptik-Array 41 in einem regelmäßigen, beispielsweise in einem quadratischen (siehe Figur 4) oder hexagonalen (nicht gezeigt) Muster, angeordnet. Die Mikro-Austrittsoptiken können als konvexe Linsen ausgebildet sein, die eine charakteristische Größe, beispielsweise Durchmesser ihrer dem Leuchtmittel 2 zugewandten Seite, in dem Mikrometerbereich aufweisen. Dabei wird eine sehr vorteilhafte Bautiefe des gesamten Lichtmoduls erreicht. Durch Verwenden solch kleiner Optiken, die in dem Mikro-Austrittsoptik-Array angeordnet sind, kann die Lichtausbeute gesteigert und für die entsprechende Anwendung angepasst werden.

Bei einer bevorzugten Ausführungsform kann vorgesehen sein, dass auf der Steuereinrichtung eine Software gespeichert ist, welche Software konfiguriert ist, die einzelnen Leuchtmittel-Bereiche 2a bis 2d zu steuern. Dadurch kann Bedienbarkeit des Lichtmoduls erleichtert werden.

Vorzugsweise ist die Software als eine Anwendungssoftware ausgebildet. Darüber hinaus kann es besonders vorteilhaft sein, wenn die Software der Steuereinrichtung mittels eines tragbaren Steuergeräts fernbedienbar ist. Das Steuergerät kann ein Smartphone oder ein Tablet mit einer entsprechenden, mit der Software verbindbaren Smartphone- oder Tablet-App sein. Dadurch wird die Anzahl der Benutzer, die das Beleuchtungssystem beziehungsweise das Lichtmodul bedienen können immens erhöht. Ein weiterer Vorteil ergibt sich dadurch, dass die gewünschten Lichtmuster nicht direkt an dem Beleuchtungssystem beziehungsweise an dem Lichtmodul sondern fern von dem Lichtmodul, an dem tragbaren Steuergerät, simuliert und eingestellt werden und später auf das Beleuchtungssystem beziehungsweise auf das Lichtmodul nur eingespielt werden können.

Dabei ergibt sich ein Vorteil, dass für verschiedene Kunden beziehungsweise Anwendungsfälle über die Anwendungssoftware oder die Smartphone- oder die Tablet-App Symbole, die von Teil-Projektionssystemen erzeugt werden, aktiv geschalten werden können, sodass für mehrere Kunden dasselbe Lichtmodul verwendet werden kann. Die Anwendungssoftware oder die Smartphone- oder die Tablet-App ließe sich auch individuell bezogen auf verschiedene Blendenvorrichtungen 42 einstellen.

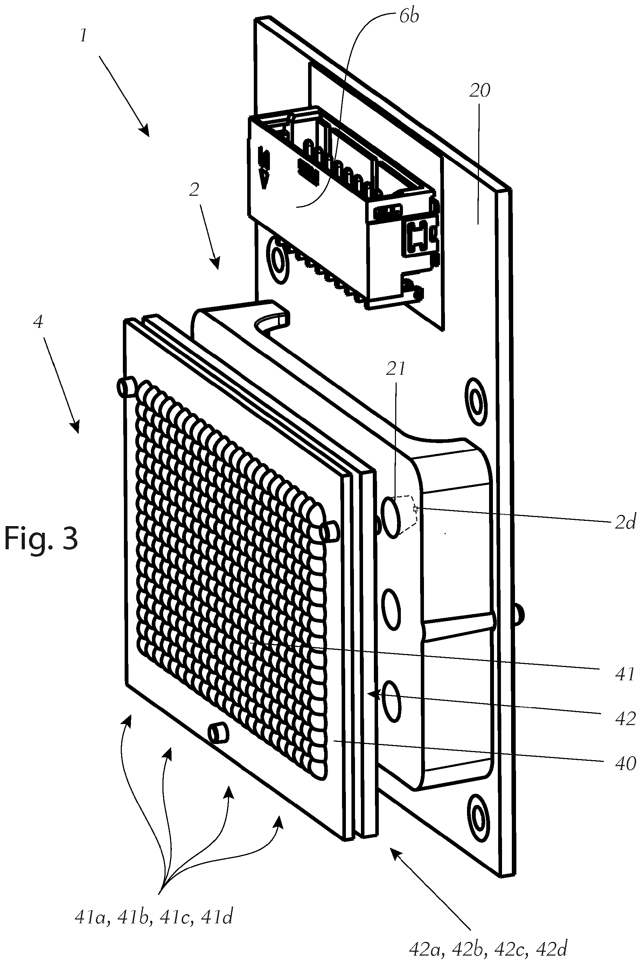

Bei einer praxisbewährten Ausführungsform (siehe z.B. Figur 3) ist das Leuchtmittel 2 als eine mehrere einzelne LEDs umfassende LED-Lichtquelle ausgebildet ist, wobei vorzugsweise jeder Leuchtmittel-Bereich 2a bis 2d zumindest eine LED umfasst. Die LEDs können auf einer gemeinsamen Platine 20 in einer matrixartigen Anordnung aufgebracht sein, wobei vorzugsweise jeder einzelnen LED ein lichtkollimierender Optikkörper 21 nachgelagert ist. Oft wird der lichtkollimierender Optikkörper 21 auch als "Kollimator" genannt. Der Begriff lichkollimierender Optikkörper oder Kollimator subsummiert mehrere Begriffe, wie beispielsweise TIR-Linse, Silikon-Optikkörper, lichtleitende Silikonoptik oder ein Reflektor mit verspiegelten Reflektorflächen einer bestimmter Form.

Der Figur 3 ist weiters zu entnehmen, dass alle lichtkollimierende Optikkörper 21 miteinander einstückig ausgebildet sein können. Einstückige Ausführungen sind leichter herzustellen. Darüber hinaus kann dadurch das Justieren des gesamten optischen Systems - des Kraftfahrzeuglichtmoduls - vereinfacht werden. Die lichtkollimierenden Optikkörper 21 (unabhängig davon, ob sie einstückig miteinander oder getrennt ausgebildet sind) können an der gemeinsamen Platine 20 fixiert/befestigt sein.

Darüber hinaus zeigt die Figur 3 eine an der gemeinsamen Platine 20 angeordnete Schnittstelle 6b für die - in diesem Fall externe - Steuereinrichtung 6, über welche die Steuereinrichtung 6 das Leuchtmittel 2 und insbesondere die einzelnen Leuchtmittel-Bereiche 2a bis 2d steuern kann, indem sie beispielsweise Steuersignale von dem Steuergerät 6a über die Schnittstelle 6b an das Leuchtmittel 2 und insbesondere an die einzelnen Leuchtmittel-Bereiche 2a bis 2d überträgt.

Weiters ist es zweckmäßig, wenn das Kraftfahrzeuglichtmodul 1 Justier- und Fixiermittel (nicht gezeigt) aufweist, welche es erlauben, das Projektionssystem 4 in Bezug auf das Leuchtmittel 2 zu positionieren, justieren und nach dem Justieren zu fixieren. Um die Handhabung des Kraftfahrzeuglichtmoduls 1 können die Justier- und Fixiermittel derart ausgebildet sein, dass sich das Projektionssystem 4 beziehungsweise ihre Blendenvorrichtung 42 leicht austauschen lässt. Dafür können beispielsweise ähnliche Mechanismen wie bei einem Diaprojektor in Frage kommen, wobei bei der vorliegenden Erfindung Projektionssystem 4 beziehungsweise ihre Blendenvorrichtung 42 ähnlich wie Dias in einem Diaprojektor austauschbar sind.

Wie bereits erwähnt kann das Mikro-Austrittsoptik-Array 41 direkt an dem Träger 40 angebracht, insbesondere mit diesem verklebt sein.

Weiters kann vorgesehen sein, dass das Projektionssystem 4 zusätzlich ein Mikro-Eintrittsoptik-Array umfasst, welches dem Träger 40 derart vorgelagert ist, dass jeder Mikro-Austrittsoptik 41a bis 41d zumindest eine Mikro-Eintrittsoptik des Mikro-Eintrittsoptik-Arrays zugeordnet ist (siehe Figur 3 oder 6). Mit dem Mikro-Eintrittsoptik-Array kann die Verteilung der Lichtintensität noch mehr beeinflusst werden. Wenn das Licht 3 kollimiert ist, kann eine möglichst homogene Ausleuchtung des Projektionssystems 4 erzielt werden. Um beispielsweise Mitte eines Logos stärker auszuleuchten oder nicht genutzte Randbereiche lichttechnisch zu verwerten, kann durch das Mikro-Eintrittsoptik-Array eine Grundlichtverteilung nach der gewünschten Anwendung ausgelegt werden.

Weiters zeigt Figur 5 eine perspektivische Ansicht eines Lichtmoduls der Figur 1 oder 2, das an einem Kühlkörper 7 befestigt ist.

Es versteht sich, dass sowohl Mikro-Eintrittsoptiken als auch Mikro-Austrittsoptiken, die beispielsweise als (z.B. konvexe) Linsen ausgebildet sein können, für eine gedachte Anwendung, sprich für das gewünschte Lichtmuster, konstruiert werden.

Die vorstehende Diskussion der Erfindung wurde zu Zwecken der Darstellung und Beschreibung vorgestellt. Das Vorstehende soll die Erfindung nicht auf die hierin offenbarte Form oder Formen beschränken. In der vorstehenden ausführlichen Beschreibung sind beispielsweise verschiedene Merkmale der Erfindung in einer oder mehreren Ausführungsformen zum Zwecke der Straffung der Offenbarung zusammengefasst. Diese Art der Offenbarung ist nicht so zu verstehen, dass sie die Absicht widerspiegelt, dass die beanspruchte Erfindung mehr Merkmale erfordert, als in jedem Anspruch ausdrücklich erwähnt wird. Vielmehr liegen, wie die folgenden Ansprüche widerspiegeln, erfinderische Aspekte in weniger als allen Merkmalen einer einzigen vorstehend beschriebenen Ausführungsform vor. Somit werden die folgenden Ansprüche hiermit in diese detaillierte Beschreibung aufgenommen, wobei jeder Anspruch allein als eine separate bevorzugte Ausführungsform der Erfindung steht.

Die Bezugsziffern in den Ansprüchen dienen lediglich zum besseren Verständnis der vorliegenden Erfindungen und bedeuten auf keinen Fall eine Beschränkung der vorliegenden Erfindungen.

## Patentansprüche

1. Kraftfahrzeuglichtmodul (1) umfassend
- ein zum Erzeugen von Licht (3) eingerichtetes Leuchtmittel (2),
- ein dem Leuchtmittel (2) nachgelagertes Projektionssystem (4), welches das von dem Leuchtmittel (2) erzeugte Licht (3) in einen Bereich (5) vor dem Kraftfahrzeuglichtmodul (1) projiziert, wobei
- das Projektionssystem (4)
* einen Träger (40) aus einem von Licht (3) durchstrahlbaren Material,
* ein Mikro-Austrittsoptik-Array (41), und
* eine Blendenvorrichtung (42)
aufweist, wobei die Blendenvorrichtung (42) an einer dem Leuchtmittel (2) zugewandten Seite des Trägers (40) und das Mikro-Austrittsoptik-Array (41) nah an einer dem Leuchtmittel (2) abgewandten Seite des Trägers (40) angeordnet ist,
- die Blendenvorrichtung (42) mehrere Blenden-Bereiche (42a bis 42l) aufweist, wobei jedem Blenden-Bereich (42a bis 42l) zumindest eine Mikro-Austrittsoptik (41a bis 41d) des Mikro-Austrittsoptik-Arrays (41) zugeordnet ist und jeder Blenden-Bereich (42a bis 42l) und zumindest eine, diesem Blenden-Bereich (42a bis 42l) zugeordnete Mikro-Austrittsoptik (41a bis 41d), ein Teil-Projektionssystem bilden, wobei jedem Teil-Projektionssystem ein Leuchtmittel-Bereich (2a bis 2d) des Leuchtmittels (2) derart zugeordnet ist, dass das von diesem Leuchtmittel-Bereich (2a bis 2d) erzeugte Licht (3a bis 3d) im Wesentlichen nur auf jenes Teil-Projektionssystem trifft, dem dieser Leuchtmittel-Bereich (2a bis 2d) zugeordnet ist,
**dadurch gekennzeichnet, dass**
die Teil-Projektionssysteme unterschiedlich ausgebildet sind und
die Leuchtmittel-Bereiche (2a bis 2d) mittels einer Steuereinrichtung (6) unabhängig voneinander steuerbar sind, wobei jedes Teil-Projektionssystem von dem Leuchtmittel-Bereich (2a bis 2d) abgestrahltes Licht (3a bis 3d) in Form eines steuerbaren Teil-Lichtmusters in einen Bereich (5) vor dem Kraftfahrzeuglichtmodul (1) projiziert und die steuerbaren Teil-Lichtmuster gemeinsam ein steuerbares Lichtmuster bilden.

2. Kraftfahrzeuglichtmodul nach Anspruch 1, **dadurch gekennzeichnet, dass** das Projektionssystem (4) und/oder seine Blendenvorrichtung (42) austauschbar ist/sind.

3. Kraftfahrzeuglichtmodul nach Anspruch 1 oder 2, **dadurch gekennzeichnet, dass** die Blenden-Bereiche (42a bis 42l) der unterschiedlichen Teil-Projektionssysteme unterschiedlich ausgebildet sind.

4. Kraftfahrzeuglichtmodul nach einem der Ansprüche 1 bis 3, **dadurch gekennzeichnet, dass** das Mikro-Austrittsoptik-Array (41) als ein Plättchen ausgebildet ist, wobei das Plättchen in etwa 1 bis 10 mm breit und 1 bis 10 mm lang, vorzugsweise 1 bis 2 mm breit und 2 bis 3 mm lang, insbesondere 1,8 mm mal 2 mm groß ist.

5. Kraftfahrzeuglichtmodul nach einem der Ansprüche 1 bis 4, **dadurch gekennzeichnet, dass** die Mikro-Austrittsoptiken (41a bis 41d) in dem Mikro-Austrittsoptik-Array (41) in einem regelmäßigen, beispielsweise in einem quadratischen oder hexagonalen, Muster angeordnet und vorzugsweise als konvexe Linsen ausgebildet sind, wobei die Linsen eine charakteristische Größe, beispielsweise einen charakteristischen Durchmesser ihrer dem Leuchtmittel (2) zugewandten Seite, im Mikrometerbereich aufweisen.

6. Kraftfahrzeuglichtmodul nach einem der Ansprüche 1 bis 5, **dadurch gekennzeichnet, dass** das Leuchtmittel (2) als eine mehrere einzelne LEDs umfassende LED-Lichtquelle ausgebildet ist, wobei vorzugsweise jeder Leuchtmittel-Bereich (2a bis 2d) zumindest eine LED umfasst.

7. Kraftfahrzeuglichtmodul nach Anspruch 6, **dadurch gekennzeichnet, dass** die LEDs auf einer gemeinsamen Platine (20) in einer matrixartigen Anordnung aufgebracht sind, wobei vorzugsweise jeder einzelnen LED ein lichtkollimierender Optikkörper (21), beispielsweise eine TIR-Linse oder ein Silikon-Optikkörper, nachgelagert ist.

8. Kraftfahrzeuglichtmodul nach einem der Ansprüche 1 bis 7, **dadurch gekennzeichnet, dass** das Projektionssystem (4) ferner ein Mikro-Eintrittsoptik-Array umfasst, welches dem Träger (40) derart vorgelagert ist, dass jeder Mikro-Austrittsoptik (41a bis 41d) zumindest eine Mikro-Eintrittsoptik des Mikro-Eintrittsoptik-Arrays zugeordnet ist.

9. Kraftfahrzeuglichtmodul nach einem der Ansprüche 1 bis 8, **dadurch gekennzeichnet, dass** unterschiedliche Leuchtmittel-Bereiche (2a bis 2d) eingerichtet sind, Licht (3) in jeweils unterschiedlichen Wellenlängen abzustrahlen.

10. Beleuchtungssystem für ein Kraftfahrzeug umfassend zumindest ein Kraftfahrzeuglichtmodul nach einem der Ansprüche 1 bis 9 und die Steuereinrichtung (6).

11. Beleuchtungssystem nach Anspruch 10, **dadurch gekennzeichnet, dass** die Steuereinrichtung, wobei auf der Steuereinrichtung (6) eine Software gespeichert ist, welche Software konfiguriert ist, die einzelnen Leuchtmittel-Bereiche (2a bis 2d) zu steuern, und die Steuereinrichtung entweder ein integraler Teil des Kraftfahrzeuglichtmoduls oder eine - in Hinblick auf das Kraftfahrzeuglichtmodul - externe Steuereinrichtung (6) ist.

12. Beleuchtungssystem nach Anspruch 11, **dadurch gekennzeichnet, dass** die Software der Steuereinrichtung (6) mittels eines tragbaren Steuergeräts (6a) fernbedienbar ist, wobei das tragbare Steuergerät (6a) vorzugsweise als ein Smartphone oder ein Tablet ausgebildet ist, und die Software als eine Anwendungssoftware ausgebildet ist.

13. Beleuchtungssystem nach einem der Ansprüche 10 bis 12, **dadurch gekennzeichnet, dass** die Steuereinrichtung (6) als ein Kraftfahrzeug-Bordcomputer ausgebildet ist.

14. Kraftfahrzeugscheinwerfer mit zumindest einem Kraftfahrzeuglichtmodul nach einem der Ansprüche 1 bis 9 oder einem Beleuchtungssystem nach einem der Ansprüche 10 bis 12.

15. Kraftfahrzeug mit zumindest einem Kraftfahrzeuglichtmodul nach einem der Ansprüche 1 bis 9, wobei das Kraftfahrzeuglichtmodul in dem Inneren des Kraftfahrzeugs verbaut ist.
